# EUROPÄISCHE PATENTSCHRIFT

(11) **EP 4 516 716 B1**
(45) Veröffentlichungstag und Bekanntmachung des Hinweises auf die Patenterteilung: **19.11.2025**
(21) Anmeldenummer: 23194840.7
(22) Anmeldetag: 01.09.2023
(51) Int. Cl.: B66B 1/34

(54) **DETEKTIONSEINRICHTUNG ZUR BESTIMMUNG DES STOCKWERKS**
DETECTION DEVICE FOR DETERMINING THE LANDING
DISPOSITIF DE DÉTECTION POUR DÉTERMINER LE PALIER

(43) Veröffentlichungstag der Anmeldung: 05.03.2025
(73) Patentinhaber: Cedes AG, 7302 Landquart (CH)
(72) Erfinder: von Allmen, Andri, 7302 Landquart (CH); Härdi, Simon, 7212 Seewis-Schmitten (CH)
(74) Vertreter: RavensPAT Patentanwälte Partnerschaft mbB

(56) Entgegenhaltungen:
- EP-A1- 3 581 534
- EP-A1- 3 663 249
- EP-A1- 3 693 314

## Beschreibung

Die Erfindung betrifft eine Detektionseinrichtung für einen Aufzug zur Bestimmung des Stockwerks beim Halt der Aufzugskabine an einem Stockwerk.

Aus dem Stand der Technik sind Detektionseinrichtungen bekannt, welche ein Vibrationsprofil einer Aufzugstüre aufnehmen und mit vorhandenen Vibrationsprofilen vergleichen, welchem einem Stockwerk zugeordnet sind. Zum Beispiel ist aus EP 3 581 534 A1 bekannt, Vibrationsdaten aufzunehmen und zu überwachen.

Es ist Aufgabe der Erfindung, eine verbesserte Detektionseinrichtung der genannten Art bereit zu stellen.

Diese Aufgabe wird, ausgehend von einer Detektionseinrichtung der eingangs genannten Art, durch eine Detektionseinrichtung nach Anspruch 1 und einen Aufzug nach Anspruch 10 gelöst. Vorteilhafte Ausgestaltungen sind in den weiteren abhängigen Ansprüchen angegeben.

Die erfindungsgemäße Detektionseinrichtung ist eine Detektionseinrichtung für einen Aufzug mit einer Kabine mit mindestens einer Kabinentüre, welche dazu ausgelegt ist, beim Halt der Kabine an einem Stockwerk eine Öffnungsbewegung und eine Schliessbewegung auszuführen, zur Bestimmung des Stockwerks beim Halt der Aufzugskabine an einem Stockwerk. Die Detektionseinrichtung weist mindestens eine Beschleunigungsmesser zur Detektion der Vibration der Kabinentüre bei der Öffnungsbewegung und/oder der Schliessbewegung auf. Die Detektionseinrichtung weist eine Auswerteeinrichtung auf, welche dazu ausgeprägt ist, aus der Detektion der Vibration bei einer Öffnungsbewegung und/oder Schliessbewegung ein Vibrationsprofil zu erstellen, und in einer Lernphase für jedes von mindestens zwei Stockwerken ein Referenz-Vibrationsprofil aus einem oder mehreren Vibrationsprofilen zu erstellen und zu speichern, und ausserhalb der Lernphase das aktuell aufgenommene Vibrationsprofil mit den vorhandenen Referenz-Vibrationsprofilen zu vergleichen, und das Referenz-Vibrationsprofil mit der besten Passung zum aktuell aufgenommenen Vibrationsprofil aus dem Vergleich zu bestimmen, und daraus das zutreffende Stockwerk zu bestimmen.

Die Detektionseinrichtung weist darüber hinaus ein Lichtgitter zur Detektion eines Objekts im Bereich einer geöffneten Kabinentüre auf, welches eine Senderleiste und eine Empfängerleiste aufweist, wobei mindestens eine der Leisten zur Montage an der Kabinentüre vorgesehen ist. Darüber hinaus ist der mindestens eine Beschleunigungsmesser an der Senderleiste oder Empfängerleiste angeordnet, welche zur Befestigung an der Kabinentüre vorgesehen ist.

Das Vibrationsprofil ist eine Eigenschaft aus der Messung der Vibration bei einer Öffnungsbewegung und/oder einer Schliessbewegung. Die Eigenschaft kann der zeitliche Verlauf der Beschleunigung sein, oder ein davon abgeleiteter Verlauf oder ein davon abgeleiteter Status sein.

Beste Passung kann bedeuten, dass eine Eigenschaft oder ein Teil der Eigenschaft eines Vibrationsprofils weniger von der Eigenschaft oder dem Teil der Eigenschaft eines Referenz-Vibrationsprofils abweicht als andere Vibrationsprofile. Beste Passung kann auch bedeuten, dass eine Eigenschaft oder ein Teil der Eigenschaft eines Vibrationsprofils um weniger als eine Schwellenwert von der entsprechenden Eigenschaft oder dem entsprechenden Teil der Eigenschaft eines Referenz-Vibrationsprofils abweicht.

Dies kann den Vorteil ausbilden, dass die Detektionseinrichtung in einfacher Weise zusammen mit dem Lichtgitter montiert werden kann. Dies kann den Vorteil ausbilden, dass der Beschleunigungsmesser zusammen mit dem Lichtgitter stets an einer wohldefinierten Stelle angebracht ist. Dies kann die Detektion und die Bestimmung des Stockwerks vereinfachen und genauer machen.

Vorzugsweise weist der mindestens eine Beschleunigungsmesser einen gemeinsamen Träger oder ein gemeinsames Gehäuse mit der Senderleiste und/oder der Empfängerleiste auf.

Dies kann den Vorteil ausbilden, dass die Detektionseinrichtung in einfacher Weise zusammen mit dem Lichtgitter montiert werden kann. Dies kann den Vorteil ausbilden, dass der Beschleunigungsmesser zusammen mit dem Lichtgitter stets an einer wohldefinierten Stelle angebracht ist. Dies kann die Detektion und die Bestimmung des Stockwerks vereinfachen und genauer machen.

Vorzugsweise weist die Detektionseinrichtung einen Statussignalgeber auf zur Ausgabe eines Signals für Beginn und/oder Ende der Detektion der Vibration, wobei das Signal insbesondere nicht aus der Detektion der Vibration gewonnen ist und wobei die Auswerteeinrichtung dazu ausgeprägt ist, den Beginn und das Ende der Detektion aus dem Signal abzuleiten.

Dies kann den Vorteil ausbilden, dass die Vibrationssignatur sehr viel genauer detektiert werden kann. Dies kann den Vorteil ausbilden, dass die Genauigkeit erhöht und der Aufwand zur Analyse reduziert wird.

Vorzugsweise ist der Statussignalgeber durch das Lichtgitter und die Auswerteeinrichtung gebildet, wobei das Lichtgitter dazu ausgelegt ist, den Abstand zwischen Senderleiste und Empfängerleiste zu detektieren, insbesondere aus der Detektion der empfangenen Intensität, und wobei die Auswerteeinrichtung dazu ausgelegt ist, aus der Detektion des Abstandes den zeitlichen Beginn und/oder Ende für die Detektion der Vibration bei der Öffnungsbewegung und/oder der Schliessbewegung zu bestimmen, und insbesondere mit einem bestimmten Abstandswert zu verknüpfen.

Dies kann den Vorteil ausbilden, dass die Detektionseinrichtung den Beginn und/oder das Ende ohne Input von aussen bestimmen kann. Dies kann den Vorteil ausbilden, dass die Detektionseinrichtung zuverlässiger arbeitet.

Vorzugsweise ist der Statussignalgeber dazu ausgelegt das Signal für den Beginn und/oder das Ende der Detektion der Vibration bei der Öffnungsbewegung und/oder der Schliessbewegung in Abhängigkeit von einem Signal von der Türsteuerung zu bilden.

Dies kann den Vorteil ausbilden, dass das Signal in sehr einfacher Weise gewonnen werden kann.

Vorzugsweise ist der mindestens eine Beschleunigungsmesser zur Detektion der Vibration der Stockwerkstüre bei der Öffnungsbewegung und/oder der Schliessbewegung ausgeprägt. Vorzugsweise ist der mindestens eine Beschleunigungsmesser zur Detektion der Vibration in Richtung der Öffnungs- und Schliessbewegung der Kabinentüre ausgelegt. Vorzugsweise ist der Beschleunigungsmesser zur Detektion der Vibration in Richtung senkrecht zur Senderleiste und/oder Empfängerleiste in der Ebene, welche von Senderleiste und Empfängerleiste aufgespannt wird, ausgelegt. Vorzugsweise ist der Beschleunigungsmesser in der oberen Hälfte, insbesondere im oberen Viertel, insbesondere am oberen Ende der Senderleiste und/oder Empfängerleiste, in Bezug auf die Montageposition, angeordnet.

Dies kann den Vorteil ausbilden, dass das Signal-Rausch-Verhältnis verbessert wird, und dass die Zuverlässigkeit erhöht wird.

Vorzugsweise weist die Detektionseinrichtung zwei Vibrationsmesser auf, wobei ein erster an der Senderleiste und ein zweiter an der Empfängerleiste befestigt ist, welche beide zur Befestigung an einer Kabinentüre vorgesehen sind.

Die Analyse der Messung der zwei Vibrationsmesser kann getrennt für jeden Vibrationsmesser oder über die gemittelte Messung beider Vibrationsmesser erfolgen.

Dies kann den Vorteil ausbilden, dass die Ausfallsicherheit erhöht wird.

Vorzugsweise ist die Auswerteeinrichtung dazu ausgebildet, das Vibrationsprofil aus einer Analyse des zeitlichen Verlaufs der Vibration zu erstellen, insbesondere durch eine Zeit-Domain Analyse, einer Frequenz-Domain Analyse, und/oder einer Sequenzanalyse. Diese Analysen können dem oben erwähnten abgeleiteten Status bilden.

Dies kann den Vorteil ausbilden, dass der anschliessende Vergleich zur Bestimmung des Stockwerks besonders zuverlässig, und/oder schneller erfolgen kann.

Vorzugsweise ist die Auswerteeinrichtung dazu ausgebildet, in der Lernphase für jedes Stockwerk ein Referenz-Vibrationsprofil aus einem oder mehreren Vibrationsprofilen zu erstellen und zu speichern.

Dies kann den Vorteil ausbilden, dass die Detektionseinrichtung universell im Aufzug Verwendung finden kann.

Der erfindungsgemässe Aufzug ist ein Aufzug mit mindestens zwei Stockwerken mit einer erfindungsgemässen Detektionseinrichtung wie vorgehend beschrieben.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: 2-flüglige Kabinen- und Stockwerkstüren
- Fig. 2: Kabinen- und Stockwerkstüre mit Kopplungseinrichtung
- Fig. 3: Grafik der Distanzmessung an der Kabinentüre
- Fig. 4: Vibrations-Signaturen verschiedener Stockwerke

### Detaillierte Beschreibung der Zeichnungen:

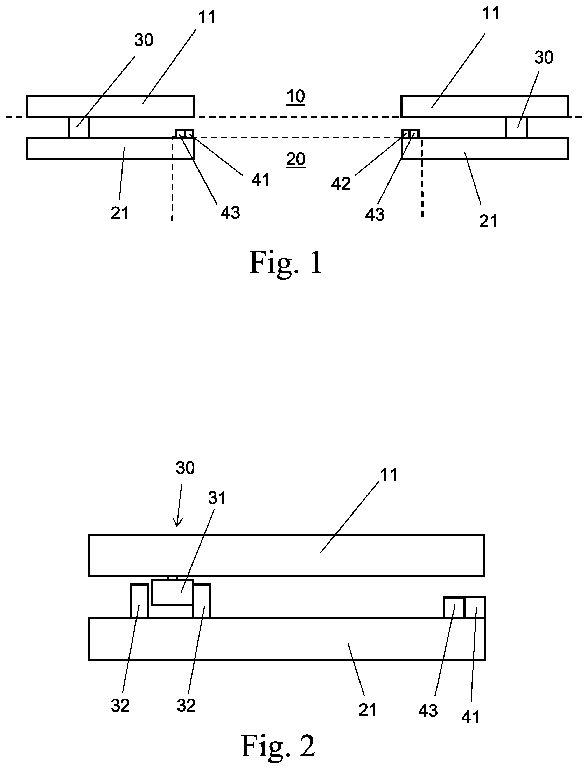

Fig. 1 zeigt eine Aufzugskabine 20 auf der Landeposition eines Stockwerkes 10. Das Stockwerk weist zwei Schachttüren 11 auf. Die Kabine weist zwei Kabinentüren 21 auf. Die Schachtüren und die Kabinentüren sind als Schiebetüren ausgebildet. Die Kabinentüren 21 sind in Schieberichtung für eine Öffnungsbewegung oder eine Schliessbewegung motorisch bewegbar. Die Kabinentüren 21 sind in der Landeposition jeweils über eine Kopplungseinrichtung 30 mit den Schachttüren 11 verbunden, sodass bei motorischem Antrieb der Kabinentüren die Schachtüren diese Bewegung in gleicher Weise mit ausführen. Auf den Aussenseiten der Kabinentüre sind bündig zur in Schliessrichtung zeigenden Kante der Kabinentüre eine Senderleiste 41 und eine Empfängerleiste 43 eines Lichtgitters jeweils senkrecht befestigt. Die Senderleiste 41 und die Empfängerleiste 43 haben jeweils einen Beschleunigungsmesser 43 mit einer nicht gezeigten Auswerteeinrichtung im Gehäuse integriert. Der Beschleunigungsmesser ist etwa 20 cm vom oberen Ende der jeweiligen Leiste im Gehäuse angeordnet.

Fig. 2 zeigt im Detail eine Kabinentüre 21 und eine Schachttüre 11 welche über eine Kopplungseinrichtung 30 verbunden sind. Die Kopplungseinrichtung weist eine Rolle 31 auf, welche mit ihrer Achse an der Schachttüre 11 befestigt ist und zwei Mitnehmerschwerter 32, welche an der Aufzugstüre befestigt sind. Die Mitnehmerschwerter sind so angeordnet, dass sie die Rolle in Landeposition in waagrechter Richtung bewegen können, sodass die Bewegung der angetriebenen Kabinentüre auf die Schachttüre übertragen wird. Durch die Kopplungseinrichtung werden Vibrationen von der Schachttüre auf die Kabinentüre übertragen.

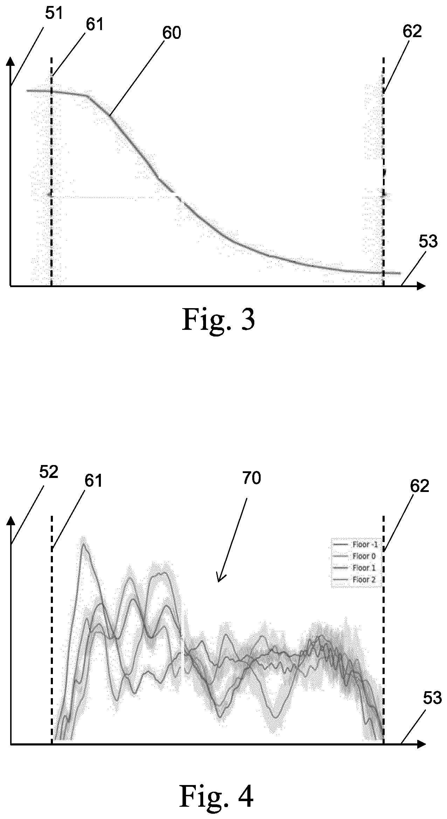

Fig. 3 zeigt eine Grafik zur Distanzmessung der Lichtgitter an der Kabinentüre bei einer Öffnungsbewegung. Die senkrechte Achse 51 zeigt die Intensität. Die waagrechte Achse 53 zeigt Zeitverlauf. Dieser ist hier in etwa proportional zum Abstand. Die Kurve 60 zeigt die von der Empfängerleiste detektiert Intensität in Abhängigkeit von der Distanz zur Senderleiste. Dies entspricht dem Abstand der beiden Kabinentüren zueinander. Der Zeitpunkt 61 entspricht vollständig geschlossenen Kabinentüren beim Beginn der Öffnungsbewegung. Der Zeitpunkt 62 entspricht dem Ende der Öffnungsbewegung mit vollständig geöffneten Kabinentüren.

Fig. 4 zeigt eine Grafik mit fünf Vibrationssignaturen 70, welche unterschiedlichen Stockwerken zugeordnet sind. Die senkrechte Achse 52 zeigt ein Mass für die Vibration. Die waagrechte Achse 53 zeigt den Zeitverlauf. Die Zeitpunkte 61 und 62 für den Beginn und das Ende der Öffnungsbewegung sind von der Messung gemäss Figur 3 übernommen. Die fünf Vibrationssignaturen 70 weisen charakteristisch unterschiedlichen Verlauf auf.

### Bezugszeichenliste:

- 10: Stockwerk
- 11: Stockwerktüre

- 20: Kabine
- 21: Kabinentüre

- 30: Mitnehmereinrichtung
- 31: Mitnehmer-Rolle
- 32: Mitnehmer-Schwerter

- 41: Senderleiste
- 42: Empfängerleiste
- 43: Beschleunigungsmesser

- 51: Intensität
- 52: Vibrations-Stärke
- 53: Zeit

- 60: Zeitverlauf der Distanz
- 61: Beginn einer Öffnungsbewegung
- 62: Ende einer Öffnungsbewegung

- 70: Vibrationssignaturen

## Patentansprüche

1. Detektionseinrichtung
- für einen Aufzug mit einer Kabine (20) mit mindestens einer Kabinentüre (21), welche dazu ausgelegt ist, beim Halt der Kabine (20) an einem Stockwerk (10) eine Öffnungsbewegung und eine Schliessbewegung auszuführen,
- zur Bestimmung des Stockwerks (10) beim Halt der Aufzugskabine (20) an einem Stockwerk (10)
- mit mindestens einem Beschleunigungsmesser (43)
- zur Detektion der Vibration der Kabinentüre (21) bei der Öffnungsbewegung und/oder der Schliessbewegung
- mit einer Auswerteeinrichtung, welche dazu ausgeprägt ist,
- aus der Detektion der Vibration bei einer Öffnungsbewegung und/oder Schliessbewegung ein Vibrationsprofil zu erstellen,
- in einer Lernphase für jedes von mindestens zwei Stockwerken (10) ein Referenz-Vibrationsprofil aus einem oder mehreren Vibrationsprofilen zu erstellen und zu speichern,
- ausserhalb der Lernphase das aktuell aufgenommene Vibrationsprofil mit den vorhandenen Referenz-Vibrationsprofilen zu vergleichen,
- das Referenz-Vibrationsprofil mit der besten Passung zum aktuell aufgenommenen Vibrationsprofil aus dem Vergleich zu bestimmen,
- und daraus das zutreffende Stockwerk (10) zu bestimmen,
**dadurch gekennzeichnet, dass**
- die Detektionseinrichtung ein Lichtgitter aufweist
- zur Detektion eines Objekts im Bereich einer geöffneten Kabinentüre (21) und
- welches eine Senderleiste (41) und eine Empfängerleiste (42) aufweist, wobei mindestens eine der Leisten zur Montage an der Kabinentüre (21) vorgesehen ist,
- wobei der mindestens eine Beschleunigungsmesser (43)
- an der Senderleiste (41) oder Empfängerleiste (42) angeordnet ist, welche zur Befestigung an der Kabinentüre (21) vorgesehen ist.

2. Detektionseinrichtung nach Anspruch 1, **dadurch gekennzeichnet, dass**
- der mindestens eine Beschleunigungsmesser (43)
- einen gemeinsamen Träger oder ein gemeinsames Gehäuse mit der Senderleiste (41) und/oder der Empfängerleiste (42) aufweist.

3. Detektionseinrichtung nach Anspruch 1 oder 2, **dadurch gekennzeichnet, dass**
- die Detektionseinrichtung eine Statussignalgeber aufweist
- zur Ausgabe eines Signals für Beginn und/oder Ende der Detektion der Vibration,
- wobei das Signal insbesondere nicht aus der Detektion der Vibration gewonnen ist und
- wobei die Auswerteeinrichtung dazu ausgeprägt ist,
- den Beginn und das Ende der Detektion aus dem Signal abzuleiten.

4. Detektionseinrichtung nach Anspruch 3, **dadurch gekennzeichnet, dass**
- der Statussignalgeber
- durch das Lichtgitter und die Auswerteeinrichtung gebildet ist,
- und das Lichtgitter dazu ausgelegt ist,
- den Abstand zwischen Senderleiste (41) und Empfängerleiste (42) zu detektieren,
- insbesondere aus der Detektion der empfangenen Intensität (51),
- und die Auswerteeinrichtung dazu ausgelegt ist,
- aus der Detektion des Abstandes den zeitlichen Beginn und/oder Ende für die Detektion der Vibration bei der Öffnungsbewegung und/oder der Schliessbewegung zu bestimmen, und insbesondere mit einem bestimmten Abstandswert zu verknüpfen.

5. Detektionseinrichtung nach Anspruch 3 oder 4, **dadurch gekennzeichnet, dass**
- der Statussignalgeber dazu ausgelegt ist
- das Signal für den Beginn und/oder das Ende der Detektion der Vibration bei der Öffnungsbewegung und/oder der Schliessbewegung in Abhängigkeit von einem Signal von der Türsteuerung zu bilden.

6. Detektionseinrichtung nach einem der vorhergehenden Ansprüche,
**dadurch gekennzeichnet, dass**
- der mindestens eine Beschleunigungsmesser (43)
- zur Detektion der Vibration der Stockwerkstüre (11) bei der Öffnungsbewegung und/oder der Schliessbewegung ausgeprägt ist und
- insbesondere zur Detektion der Vibration in Richtung der Öffnungs- und Schliessbewegung der Kabinentüre (21) ausgelegt ist und
- insbesondere zur Detektion der Vibration in Richtung senkrecht zur Senderleiste (41) und/oder Empfängerleiste (42) in der Ebene, welche von Senderleiste und Empfängerleiste aufgespannt wird, ausgelegt ist und
- insbesondere in der oberen Hälfte, insbesondere im oberen Viertel, insbesondere am oberen Ende der Senderleiste (41) und/oder Empfängerleiste (42), in Bezug auf die Montageposition, angeordnet ist.

7. Detektionseinrichtung nach einem der vorhergehenden Ansprüche,
**dadurch gekennzeichnet, dass**
- die Detektionseinrichtung zwei Vibrationsmesser aufweist,
- wobei ein erster an der Senderleiste (41) und ein zweiter an der Empfängerleiste (42) befestigt ist, welche beide zur Befestigung an einer Kabinentüre (21) vorgesehen sind.

8. Detektionseinrichtung nach einem der vorhergehenden Ansprüche,
**dadurch gekennzeichnet, dass**
- die Auswerteeinrichtung dazu ausgebildet ist,
- das Vibrationsprofil aus einer Analyse des zeitlichen Verlaufs der Vibration zu erstellen, insbesondere durch eine Zeit-Domain Analyse, einer Frequenz-Domain Analyse, und/oder einer Sequenzanalyse.

9. Detektionseinrichtung nach einem der vorhergehenden Ansprüche,
**dadurch gekennzeichnet, dass**
- die Auswerteeinrichtung dazu ausgebildet ist,
- in der Lernphase für jedes Stockwerk (10) ein Referenz-Vibrationsprofil aus einem oder mehreren Vibrationsprofilen zu erstellen und zu speichern.

10. Aufzug mit mindestens zwei Stockwerken (10) mit einer Detektionseinrichtung nach einem der vorhergehenden Ansprüche.

## Claims

1. A detection device
- for an elevator having a car (20) having at least one car door (21), which is designed to execute an opening movement and a closing movement upon stopping of the car (20) at a floor (10),
- for determining the floor (10) when the elevator car stops (20) at a floor
- having at least one accelerometer (43)
- for detecting the vibration of the car door (21) during the opening movement and/or the closing movement
- having an evaluation device, which is designed
- to prepare a vibration profile from the detection of the vibration during an opening movement and/or closing movement,
- in a learning phase for each of at least two floors (10), to prepare a reference vibration profile from one or more vibration profiles and store it,
- outside the learning phase, to compare the currently recorded vibration profile with the existing reference vibration profiles,
- to determine the reference vibration profile having the best fit to the currently recorded vibration profile from the comparison,
- and to determine the correct floor (10) therefrom,
**characterized in that**
- the detection device comprises a light curtain
- for detecting an object in the area of an open car door (21) and
- which comprises an emitter bar (41) and a receiver bar (42), wherein at least one of the bars is intended for installation on the car door (21),
- wherein the at least one accelerometer (43)
- is arranged on the emitter bar (41) or receiver bar (42) which is intended for fastening on the car door (21).

2. The detection device as claimed in claim 1, **characterized in that**
- the at least one accelerometer (43)
- comprises a common carrier or a common housing with the emitter bar (41) and/or the receiver bar (42).

3. The detection device as claimed in claim 1 or 2, **characterized in that**
- the detection device comprises a status signal generator
- to output a signal for the beginning and/or end of the detection of the vibration,
- wherein the signal is in particular not obtained from the detection of the vibration, and
- wherein the evaluation device is designed,
- to derive the beginning and the end of the detection from the signal.

4. The detection device as claimed in claim 3, **characterized in that**
- the status signal generator
- is formed by the light curtain and the evaluation device,
- and the light curtain is designed
- to detect the distance between emitter bar (41) and receiver bar (42),
- in particular from the detection of the received intensity (51),
- and the evaluation device is designed,
- from the detection of the distance, to determine the chronological beginning and/or end for the detection of the vibration during the opening movement and/or the closing movement, and in particular to link it with a specific distance value.

5. The detection device as claimed in claim 3 or 4, **characterized in that**
- the status signal generator is designed
- to form the signal for the beginning and/or the end of the detection of the vibration during the opening movement and/or the closing movement has a function of a signal from the door controller.

6. The detection device as claimed in any one of the preceding claims,
**characterized in that**
- the at least one accelerometer (43)
- is designed to detect the vibration of the floor door (11) during the opening movement and/or the closing movement and
- in particular is designed to detect the vibration in the direction of the opening and closing movement of the car door (21) and
- in particular is designed to detect the vibration in the direction perpendicular to the emitter bar (41) and/or receiver bar (42) in the plane spanned by emitter bar and receiver bar and
- in particular is arranged in the top half, in particular in the top quarter, in particular at the top end of the emitter bar (41) and/or receiver bar (42), in relation to the installation position.

7. The detection device as claimed in any one of the preceding claims,
**characterized in that**
- the detection device comprises two vibration meters,
- wherein a first one is fastened on the emitter bar (41) and a second one is fastened on the receiver bar (42), which are both intended to be fastened on a car door (21).

8. The detection device as claimed in any one of the preceding claims,
**characterized in that**
- the evaluation device is designed
- to prepare the vibration profile from an analysis of the temporal course of the vibration, in particular by a time-domain analysis, frequency-domain analysis, and/or sequence analysis.

9. The detection device as claimed in any one of the preceding claims,
**characterized in that**
- the evaluation device is designed
- in the learning phase, to prepare a reference vibration profile from one or more vibration profiles for each floor (10) and store it.

10. An elevator having at least two floors (10) having a detection device as claimed in any one of the preceding claims.

## Revendications

1. Dispositif de détection
- pour un ascenseur ayant une cabine (20) comportant au moins une porte (21) de cabine, laquelle est conçue pour exécuter un mouvement d'ouverture et un mouvement de fermeture lors de l'arrêt de la cabine (20) au niveau d'un niveau (10),
- pour déterminer le niveau (10) lors de l'arrêt de la cabine (20) d'ascenseur au niveau d'un niveau (10),
- ayant au moins un accéléromètre (43)
- pour détecter la vibration de la porte (21) de cabine lors du mouvement d'ouverture et/ou du mouvement de fermeture
- ayant un dispositif d'évaluation, lequel est conçu pour
- créer un profil de vibration à partir de la détection de la vibration lors d'un mouvement d'ouverture et/ou d'un mouvement de fermeture,
- lors d'une phase d'apprentissage, créer et mémoriser un profil de vibration de référence à partir d'un ou de plusieurs profils de vibration pour chacun d'au moins deux niveaux (10),
- comparer le profil de vibration actuellement enregistré aux profils de vibration de référence existants en dehors de la phase d'apprentissage,
- déterminer à partir de la comparaison le profil de vibration de référence ayant la meilleure concordance avec le profil de vibration actuellement enregistré,
- et déterminer à partir de celui-ci le niveau (10) correspondant,
**caractérisé en ce que**
- le dispositif de détection comporte une barrière lumineuse
- pour détecter un objet dans la zone d'une porte (21) de cabine ouverte et
- qui comporte une barre émettrice (41) et une barre réceptrice (42), au moins l'une des barres étant prévue pour être montée sur la porte (21) de cabine,
- ledit au moins un accéléromètre (43)
- étant agencé sur la barre émettrice (41) ou sur la barre réceptrice (42) qui est prévue pour être fixée sur la porte (21) de cabine.

2. Dispositif de détection selon la revendication 1,
**caractérisé en ce que**
- ledit au moins un accéléromètre (43)
- comporte un support commun ou un boîtier commun avec la barre émettrice (41) et/ou la barre réceptrice (42).

3. Dispositif de détection selon la revendication 1 ou 2, **caractérisé en ce que**
- le dispositif de détection comporte un générateur de signal d'état
- pour délivrer un signal de début et/ou de fin de détection de la vibration,
- le signal n'étant notamment pas obtenu à partir de la détection de la vibration et
- le dispositif d'évaluation étant conçu pour
- déduire le début et la fin de la détection à partir du signal.

4. Dispositif de détection selon la revendication 3,
**caractérisé en ce que**
- le générateur de signal d'état
- est formé par la barrière lumineuse et le dispositif d'évaluation,
- et la barrière lumineuse est conçue pour
- détecter la distance entre la barre émettrice (41) et la barre réceptrice (42),
- notamment à partir de la détection de l'intensité (51) reçue,
- et le dispositif d'évaluation est conçu pour
- déterminer à partir de la détection de la distance le début et/ou la fin dans le temps de la détection de la vibration lors du mouvement d'ouverture et/ou du mouvement de fermeture, et notamment les associer à une valeur de distance spécifiée.

5. Dispositif de détection selon la revendication 3 ou 4, **caractérisé en ce que**
- le générateur de signal d'état est conçu pour
- générer le signal de début et/ou de fin de détection de la vibration lors du mouvement d'ouverture et/ou du mouvement de fermeture en fonction d'un signal provenant de la commande de porte.

6. Dispositif de détection selon l'une des revendications précédentes,
**caractérisé en ce que**
- ledit au moins un accéléromètre (43)
- est conçu pour détecter la vibration de la porte (11) de niveau lors du mouvement d'ouverture et/ou du mouvement de fermeture et
- est notamment conçu pour détecter la vibration dans la direction du mouvement d'ouverture et de fermeture de la porte (21) de cabine et
- est notamment conçu pour détecter la vibration dans une direction perpendiculaire à la barre émettrice (41) et/ou à la barre réceptrice (42) dans le plan qui est formé par la barre émettrice et la barre réceptrice, et
- est notamment agencé dans la moitié supérieure, notamment dans le quart supérieur, notamment sur l'extrémité supérieure de la barre émettrice (41) et/ou de la barre réceptrice (42), par rapport à la position de montage.

7. Dispositif de détection selon l'une des revendications précédentes,
**caractérisé en ce que**
- le dispositif de détection comporte deux capteurs de vibration,
- un premier étant fixé sur la barre émettrice (41) et un second sur la barre réceptrice (42), lesquels sont tous les deux prévus pour être fixés sur une porte (21) de cabine.

8. Dispositif de détection selon l'une des revendications précédentes,
**caractérisé en ce que**
- le dispositif d'évaluation est réalisé pour
- créer le profil de vibration à partir d'une analyse de l'évolution temporelle de la vibration, en particulier par une analyse dans le domaine temporel, une analyse dans le domaine fréquentiel et/ou une analyse séquentielle.

9. Dispositif de détection selon l'une des revendications précédentes,
**caractérisé en ce que**
- le dispositif d'évaluation est réalisé pour
- lors de la phase d'apprentissage, créer et mémoriser un profil de vibration de référence à partir d'un ou de plusieurs profils de vibration pour chaque niveau (10).

10. Ascenseur ayant au moins deux niveaux (10), comprenant un dispositif de détection selon l'une des revendications précédentes.
